# EUROPÄISCHE PATENTANMELDUNG

(11) **EP 1 042 992 A2**
(43) Veröffentlichungstag der Anmeldung: **11.10.2000**
(21) Anmeldenummer: 00106920.2
(22) Anmeldetag: 31.03.2000
(51) Int. Cl.: A61C 5/12, A61C 5/14

(54) **Zahnärztliche Abschirmvorrichtung zum Abschirmen eines Zahnes**

(30) Priorität: 09.04.1999 DE 29906369 U
(71) Anmelder: Brandes, Julian, Dr., 50739 Köln (DE)
(72) Erfinder: Brandes, Julian, Dr., 50739 Köln (DE); Schmolz, Markus, 50767 Köln (DE)
(74) Vertreter: Selting, Günther, Dipl.-Ing.

(57) **Zusammenfassung**

Eine zahnärztliche Abschirmvorrichtung zum Abschirmen eines Zahnes (28) im Mundraum (18) eines Patienten nach Art eines Kofferdames weist eine flexible und dehnbare Abschirmfolie (10) auf, die zum Aufziehen auf den Zahn (28) perforierbar ist, wobei die entspannte Abschirmfolie (10) eine Mundraumausstülpung (12) aufweist, die nach einer Seite ausgewölbt ist. Die Abschirmfolie ist also nicht eben ausgebildet, sondern in ihrer Form dem Mundraum angepaßt. Die Abschirmfolie kann daher spannungsfrei in den Mundraum hineingelegt werden und bleibt auch nach dem Aufziehen der perforierten Abschirmfolie auf einen zu behandelnden Zahn im Mundraum weitgehend spannungsfrei. Dadurch ist der zu behandelnde Zahn besser zugänglich.

## Beschreibung

Die Erfindung bezieht sich auf eine zahnärztliche Abschirmvorrichtung zum Abschirmen eines oder mehrerer Zähne im Mundraum eines Patienten nach Art eines Kofferdames.

Derartige Abschirmvorrichtungen bestehen aus einer ebenen, flexiblen und dehnbaren Kunststoff-Abschirmfolie, die zunächst perforiert wird und mit der Perforationsöffnung auf den zu behandelnden Zahn aufgezogen wird. Der Perforationsrand umschließt den Zahn im Zahnhalsbereich, so daß dieser Zahn durch die Folie hindurchragt, die übrigen Zähne jedoch durch die Folie abgedeckt und geschützt sind. Der Randbereich der im entspannten Zustand ebenen Abschirmfolie wird außerhalb des Mundraumes auf einem starren Spannrahmen verspannt. Damit durch die dabei auftretende Folienspannung die Abschirmfolie mit der Perforationsöffnung nicht wieder von dem Zahn abrutscht, muß die Folie am Zahn mit entsprechenden Haltemitteln, beispielsweise mit Klammern, fixiert werden. Die Abschirmfolie wird vom Zahn ausgehend trichterartig aufgespannt, so daß die Zugänglichkeit zum Zahn eingeschränkt ist. Dies gilt insbesondere dann, wenn auf diese Weise ein Backenzahn abgeschirmt wird. Ferner bewirkt die aufgespannte Abschirmtolle beim Patienten unangenehme. Spannungseffekte auf der Haut.

Aufgabe der Erfindung ist es, die Handhabung einer Abschirmvorrichtung nach Art eines Kofferdames zu verbessern.

Diese Aufgabe wird erfindungsgemäß gelöst mit den Merkmalen des Patentanspruchs 1.

Die erfindungsgemäße Abschirmvorrichtung weist eine Abschirmfolie mit einer Mundraumausstülpung auf, die nach einer Seite ausgewölbt ist, wobei die Mundraumausstülpung in entspannten Zustand der Folie in den Mundraum hineinragend ausgebildet ist. Die Abschirmfolie ist also nicht mehr eben ausgebildet, sondern ist in ihrer Form dem Mundraum angepaßt. Die Abschirmfolie kann daher spannungsfrei in den Mundraum hineingelegt werden. Auch nach dem Aufziehen der perforierten Abschirmfolie auf einen zu behandelnden Zahn bleibt die Abschirmfolie im Mundraum weitgehend spannungsfrei und ist im wesentlichen nur im Bereich des zu behandelnden Zahnes aufgedehnt. Die Abschirmfolie hält aufgrund ihrer Dehnbarkeit selbständig am Zahnhals, wobei keine weiteren Haltemittel zum Fixieren der Folie im Mundraum erforderlich sind. Durch den Wegfall von Halteklammern an dem zu behandelnden Zahn und durch den vergrößerten Freiraum innerhalb des Mundraumes wird die Zugänglichkeit des zu behandelnden Zahnes deutlich verbessert. Hierdurch wird die Zahnbehandlung vereinfacht und beschleunigt. Durch den Wegfall der Halteklammen und durch den weitgehend spannungsfreien Sitz der Abschirmfolie wird darüber hinaus eine angenehme Behandlungssituation für den Patienten geschaffen.

Vorzugsweise ist die Länge der Mundraumausstülpung nicht größer als der doppelte maximale Öffnungsdurchmesser der Mundraumausstülpung. Diese Proportionen entsprechen ungefähr der Mundraumlänge im Verhältnis zum Durchmesser des geöffneten Mundes eines Menschen. Die Mundraumausstülpung einschließlich ihrer Öffnung ist also an einen menschlichen Mundraum bei geöffnetem Mund größenmäßig angepaßt. Dadurch wird während der Behandlung ein guter Sitz der Abschirmvorrichtung in dem geöffneten Mundraum realisiert.

In einer bevorzugten Ausgestaltung ist die Öffnung der Mundraumausstülpung oval ausgebildet. Die ovale Ausbildung der Öffnung entspricht ungefähr der Form des geöffneten Mundes eines Menschen.

Vorzugsweise weist die Abschirmfolie einen umlaufenden Kragen um die Öffnung der Mundraumausstülpung herum auf, wobei der Kragen so ausgebildet ist, daß die Abschirmfolie ungefähr hutartig ausgebildet ist. Der Kragen ist vorzugsweise einlagig, und nicht wulstartig. Der umlaufende Kragen verhindert ein unerwünscht weites Eindringen der Mundraumausstülpung in den Mundraum. Der Kragen kann außerhalb des Mundraumes beispielsweise auf einen ungefähr ovalen Halterahmen aufgespannt werden, so daß die Abschirmfolie daran gehindert ist, in den Mundraum gezogen zu werden.

Gemäß einer bevorzugten Ausgestaltung der Erfindung weist die Abschirmfolie Haltemittel auf, mit denen die Abschirmfolie am Kopf des Patienten befestigbar ist. Das Haltemittel kann beispielsweise in Form einer Öffnung in der Abschirmfolie ausgebildet sein, die über die Ohren des Patienten gezogen werden kann. Die Haltemittel verhindern, daß die Abschirmfolie in den Mundraum gezogen wird und bewirken einen straffen Sitz der Abschirmfolie, so daß die Folie die Zugänglichkeit zu dem abgeschirmten Zahn nicht behindern kann.

Vorzugsweise sind lösbare Haltemittel an der Abschirmfolie befestigt, die einen Bogen aufweisen, der an einem Ohr des Patienten einhängbar ist. Das Haltemittel kann beispielsweise als Klammer ausgebildet sein, die an der Abschirmfolie festgeklemmt wird und eine geschlossene Schleife zum Festhaken an dem Patientenohr aufweist. Damit ist auf einfache Weise eine wiederverwendbares Befestigungsmittel realisiert.

Eine andere Möglichkeit besteht darin, den äußeren Rand der Abschirmfolie zusammen mit einem Draht oder einer Kordel einzurollen und diese dann am Kopf des Patienten zu befestigen.

Im folgenden wird unter Bezugnahme auf die Zeichnungen ein Ausführungsbeispiel der Erfindung näher erläutert.

Es zeigen:
- Fig. 1: eine Abschirmfolie mit Mundraumausstülpung und umlaufendem Kragen in perspektivischer Ansicht,
- Fig. 2: einen Längsschnitt eines Patienten-Mundraumes mit der applizierten Abschirmfolie und
- Fig. 3: eine Seitenansicht des Patienten mit applizierter Abschirmfolie.

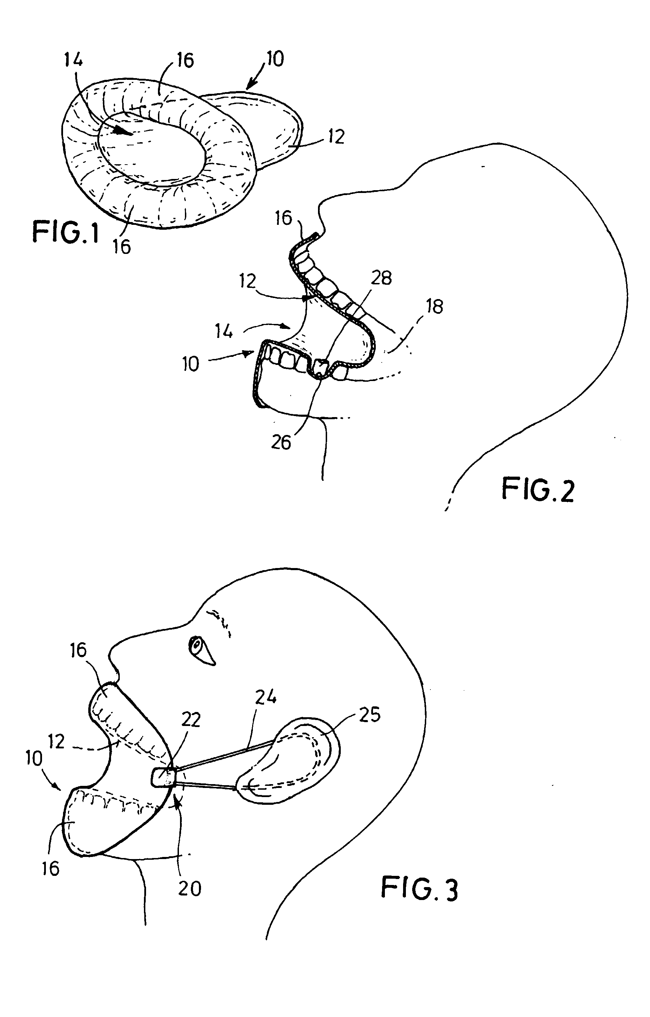

In den Fign. 1-3 ist als Abschirmvorrichtung eine Abschirmfolie 10 dargestellt, die aus einer elastischen und dehnbaren Kunststoffolie besteht. Die Abschirmvorrichtung dient zum Abschirmen eines Zahnes 28 im Mundraum 18 eines Patienten nach Art eines Kofferdames. Die entspannte Abschirmfolie 10 weist eine Mundraumausstülpung 12 auf, an deren Öffnung 14 sich ein umlaufender Kragen 16 anschließt, so daß die Abschirmfolie 10 ungefähr hutartig ausgebildet ist. Der Kragen 16 ist aus einer Lage Abschirmfolie bestehend, also nicht wulstartig zusammengerollt oder mehrlagig ausgebildet. Die Öffnung 14 ist oval ausgebildet und damit der Form eines geöffneten Mundes angepaßt.

Wie in Fig. 2 dargestellt, ist die Mundraumausstülpung 12 der Abschirmvorrichtung 10 in ihrer Größe so ausgebildet, daß sie in Form und Größe ungefähr dem Mundraum 18 des Patienten entspricht. Die Abschirmtolle 10 kann im Bereich der Ausstülpung 12 versteift sein durch Materialverstärkungen oder Rippen, um gegen ungewolltes Ansaugen durch ein Absauggerät besser geschützt zu sein.

In Fig. 3 ist erkennbar, daß die Abschirmfolie 10 als Haltemittel 20 eine Klammer 22 mit einer elastischen Schleife 24 aufweist. Die Klammer 22 wird am Außenrand des Kragens 16 festgeklemmt und die Schleife 24 hinter das Patientenohr 25 gelegt. Auf diese Weise wird die Abschirmfolie derart am Kopf des Patienten befestigt, daß die Mundraumausstülpung 12 nicht weiter in den Mundraum 18 des Patienten hineingezogen werden kann. Alternativ ist eine Befestigung mit einer um den Hinterkopf herumzuführenden Haltevorrichtung möglich, mit der kein Zug auf die Ohren ausgeübt wird.

Die Mundraumausstülpung 12 hat eine axiale Länge von ungefähr 7 cm, die ovale Öffnung 14 hat ungefähr eine Öffnungsweite von 4,5 x 4,0 cm. Die Mundraumausstülpung 12 ist über ihre gesamte Länge im Querschnitt weitgehend konstant.

Zum Applizieren der Kofferdam-Abschirmfolie 10 wird zunächst an entsprechender Stelle der Mundausstülpung 12 mit einem geeigneten Werkzeug eine kreisrunde Öffnung 26 von 1-2 mm Durchmesser in die Abschirmfolie 12 gestanzt. Die Öffnung 26 wird ungefähr an dem Ort der Ausstülpung 12 eingestanzt, an dem der zu bearbeitende Zahn 28 im Mundraum angeordnet ist. Die richtige Plazierung der Öffnung 26 kann beispielsweise dadurch erleichtert werden, daß die Abschirmfolie 10 auf der Innenseite der Ausstülpung 12 Markierungen für die entsprechenden Zähne aufweist.

Anschließend wird die Mundraumausstülpung 12 der Abschirmfolie 10 in den Mundraum 18 hineingelegt und die Öffnung 26 auf den zu bearbeitenden Zahn 28 aufgezogen. Da die Öffnung 26 nur einen Durchmesser von 1-2 mm aufweist, zieht sich der Öffnungsrand um den Zahnhals, so daß die Zahnkrone des Zahnes 28 flüssigkeitsdicht gegenüber dem Mundraum 18 und den übrigen Zähnen abgeschirmt ist. Auf diese Weise wird bei der Bearbeitung des Zahnes 28 einerseits das Feuchtwerden des zu behandelnden Zahnes 28 durch Speichel etc. vermieden, andererseits werden bei der Zahnpräparation auftretende Spritzer von Präparationsmitteln, Klebstoffen, Zahnbestandteilen (alte Füllungen) etc. aufgefangen.

Zur Fixierung der Abschirmfolie 10 wird an jeder Seite eine Halteklammer 22 an den Rand des Kragens 16 geklemmt und die Schleife 24 jeweils um das Patientenohr 25 gelegt.

Alternativ dazu kann auch die Abschirmfolie eine größere Öffnung aufweisen, mit der die Abschirmfolie über das Ohr gezogen werden kann.

Mit der Kofferdam-Abschirmfolie 10 mit integrierter Mundraumausstülpung 12 ist ein Mittel zum Anlegen eines Kofferdames geschaffen, bei dem außer im Bereich des freigelegten zu behandelnden Zahnes 28 keine oder nur geringe Spannungen in der Abschirmfolie 10 auftreten. Dadurch entfällt die Notwendigkeit einer Abrutschsicherung der Abschirmfolie im Bereich des zu behandelnden Zahnes 28. Darüber hinaus wird die Zugänglichkeit des zu behandelnden Zahnes 28 verbessert, da die Abschirmfolie 10 nicht trichterartig in Richtung Mundöffnung aufgespannt wird. Dadurch wird wiederum eine Vereinfachung und Beschleunigung der Zahnbehandlung ermöglicht.

## Patentansprüche

1. Zahnärztliche Abschirmvorrichtung zum Abschirmen eines Zahnes (28) im Mundraum (18) eines Patienten nach Art eines Kofferdames, mit einer flexiblen und dehnbaren Abschirmfolie (10), die zum Aufziehen auf den Zahn (28) perforierbar ist,
**dadurch gekennzeichnet,**
daß die entspannte Abschirmfolie (10) eine Mundraumausstülpung (12) aufweist, die nach einer Seite ausgewölbt ist.

2. Abschirmvorrichtung nach Anspruch 1, dadurch gekennzeichnet, daß die Länge der Mundraumausstülpung (12) nicht größer als der doppelte maximale Durchmesser der Öffnung (14) der Mundraumausstülpung (12) ist.

3. Abschirmvorrichtung nach Anspruch 1 oder 2, dadurch gekennzeichnet, daß die Öffnung (14) der Mundraumausstülpung (12) oval ausgebildet ist.

4. Abschirmvorrichtung nach einem der Ansprüche 1-3, dadurch gekennzeichnet, daß die Abschirmfolie (10) einen umlaufenden Kragen (16) um die Öffnung (14) der Mundraumausstülpung (12) herum aufweist, wobei die Folie im Bereich des Kragens (16) einlagig ist, so daß die Abschirmfolie (10) insgesamt ungefähr hutartig ausgebildet ist.

5. Abschirmvorrichtung nach einem der Ansprüche 1-4, dadurch gekennzeichnet, daß die Mundraumausstülpung (12) in Form und Größe ungefähr einem Mundraum (18) entspricht.

6. Abschirmvorrichtung nach einem der Ansprüche 1-5, dadurch gekennzeichnet, daß Haltemittel (20) an der Abschirmfolie (10) vorgesehen sind, mit denen die Abschirmfolie (10) am Kopf des Patienten befestigbar ist.

7. Abschirmvorrichtung nach Anspruch 6, dadurch gekennzeichnet, daß das Haltemittel (20) an der Abschirmfolie (10) lösbar befestigbar ist und Halteelemente (24) aufweist, mit dem das Haltemittel (20) am Kopf (25) des Patienten zu befestigen ist.

8. Abschirmvorrichtung nach einem der Ansprüche. 1-5, dadurch gekennzeichnet, daß die Abschirmfolie (10) auf einem den Mund des Patienten umgebenden steifen Halterahmen aufspannbar ist.
